(19) 

Europäisches
Patentamt
European
Patent Office
Office européen
des brevets

(11) **EP 4 756 655 A1**

(12) **EUROPEAN PATENT APPLICATION**

(43) Date of publication:
**10.06.2026 Bulletin 2026/24**

(21) Application number: **25201575.5**

(22) Date of filing: **11.09.2025**

(51) International Patent Classification (IPC):
**G06F 21/62** $^{(2013.01)}$

(52) Cooperative Patent Classification (CPC):
**G06F 21/6245; H04L 67/131**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.12.2024 CN 202411764068**

(71) Applicants:
• **Lemon Inc.**
  **Grand Cayman, KY1-1205 (KY)**
• **Beijing Zitiao Network Technology Co., Ltd.**
  **Beijing 100190 (CN)**

(72) Inventors:
• **ALAMPARAMBIL, Jimmy**
  **California, 90066 (US)**
• **LIU, Yunhao**
  **California, 90066 (US)**
• **ZHANG, Jian**
  **California, 90066 (US)**
• **DU, Min**
  **Beijing, 100028 (CN)**

(74) Representative: **Isarpatent**
**Patent- und Rechtsanwälte PartG mbB**
**Friedrichstraße 31**
**80801 München (DE)**

(54) **METHOD AND APPARATUS FOR PROTECTING DATA, DEVICE, AND PRODUCT**

(57) Embodiments of the present disclosure provide a method and an apparatus for protecting data in an electronic device, an electronic device, and a program product. The method (200) includes: receiving (202) first data from a first application by a security service, where the security service blocks the first application from accessing a second application to protect data. The method further includes: receiving (204) second data from the second application by the security service. In addition, the method further includes: determining (206) third data for the electronic device by the security service based on the first data and the second data.

FIG. 2

EP 4 756 655 A1

## Description

### FIELD

The present disclosure relates to the field of extended reality technologies, and in particular, to a method and an apparatus for protecting data, a device, and a product.

### BACKGROUND

With the rapid development of modern science and technology, electronic devices play an increasingly important role in personal and corporate life, and data security is particularly critical. In order to cope with the increasingly complex network environments, protecting data in electronic devices has become an extremely important task.

With the continuous enhancement of functions of the electronic devices and the increasing demand for data exchange between applications, the electronic devices flexibly adjust access control policies according to real-time user behaviors or system environments to ensure minimal exposure of data, protect data in fields such as virtual reality, healthcare, and the Internet of Things, and further provide users with security and privacy protection.

### SUMMARY

According to a first aspect of embodiments of the present disclosure, a method for protecting data in an electronic device is provided. The method includes: receiving first data from a first application by a security service, where the security service blocks the first application from accessing a second application to protect data. The method further includes: receiving second data from the second application by the security service. In addition, the method further includes: determining third data for the electronic device by the security service based on the first data and the second data.

According to a second aspect of embodiments of the present disclosure, an apparatus for protecting data in an electronic device is provided. The apparatus includes a first receiving module configured to receive first data from a first application by a security service, where the security service blocks the first application from accessing a second application to protect data. The apparatus further includes a second receiving module configured to receive second data from the second application by the security service. In addition, the apparatus further includes a determining module configured to determine third data for the electronic device by the security service based on the first data and the second data.

According to a third aspect of the present disclosure, an electronic device is provided. The electronic device includes a processor and a memory coupled to the processor, where the memory has stored therein instructions that, when executed by the processor, cause the electronic device to perform the method according to the first aspect.

According to a fourth aspect of the present disclosure, a computer program product is provided. The computer-readable storage medium has stored thereon computer-executable instructions, where the computer-executable instructions are executed by a processor to implement the method according to the first aspect.

The section Summary is provided to introduce a selection of concepts in a simplified form, which will be further described in the detailed description below. The summary section is not intended to identify key features or principal features of the claimed subject matter, nor is it intended to limit the scope of the claimed subject matter.

### BRIEF DESCRIPTION OF THE DRAWINGS

The foregoing and other features, advantages, and aspects of embodiments of the present disclosure will become more apparent with reference to the drawings and the following detailed description. In the drawings, the same or similar reference numerals denote the same or similar elements, in which:

FIG. 1 is a schematic diagram of an example environment in which some embodiments of the present disclosure can be implemented;

FIG. 2 is a flowchart of a method for protecting data according to some embodiments of the present disclosure;

FIG. 3 is a schematic diagram of a procedure of a method for protecting data according to some embodiments of the present disclosure;

FIG. 4 is a schematic diagram of a procedure of a method for rendering a stereoscopic view according to some embodiments of the present disclosure;

FIG. 5 is a schematic diagram of a procedure of a method for processing data according to some embodiments of the present disclosure;

FIG. 6 is a block diagram of an apparatus for protecting data according to some embodiments of the present disclosure; and

FIG. 7 is a block diagram of an electronic device according to some embodiments of the present disclosure.

Throughout the drawings, the same or similar reference numerals denote the same or similar elements.

## DETAILED DESCRIPTION OF EMBODIMENTS

It can be understood that the data involved in the technical solutions (including, but not limited to, the data itself and the access to or use of the data) shall comply with the requirements of corresponding laws, regulations, and relevant provisions.

It can be understood that before the use of the technical solutions disclosed in the embodiments of the present disclosure, the user shall be informed of the type, range of use, use scenarios, etc. of personal information involved in the present disclosure in an appropriate manner in accordance with the relevant laws and regulations, and the authorization of the user shall be obtained.

For example, upon reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the abovementioned process of notifying and obtaining the authorization of the user is only illustrative and does not constitute a limitation on the implementations of the present disclosure, and other manners that satisfy the relevant laws and regulations may also be applied in the implementations of the present disclosure.

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

In the description of the embodiments of the present disclosure, the term "include" and similar terms should be understood as open-ended inclusion, namely, "including but not limited to". The term "based on" should be understood as "at least partly based on". The term "an embodiment" or "the embodiment" should be understood as "at least one embodiment". The terms "first", "second", and the like may refer to different objects or the same object, unless otherwise explicitly defined. Other explicit and implicit definitions may also be included below.

During development, applications developed by developers usually need to include data such as images captured by a camera, audio data captured by a microphone, positions, and other information that may be relevant to an identity of a user for desired functions to be implemented by an electronic device, such as user authentication, personalization services, push, social functions and data analytics. However, if these protected data are provided directly to the applications of the electronic device, there may be a risk of exposing the privacy of the user, resulting in unauthorized access, data leakage, data misuse, insecure storage, and transfer.

To solve at least the above and other potential problems, the embodiments of the present disclosure provide a method for protecting data. The method includes: receiving first data from a first application (e.g., an application developed by a third-party developer) by a security service, where the first data may be a related request or input requesting access to user protection data. After receiving the first data, the security service may further block the first application from accessing a second application to protect data. The security service may be a process or procedure for protecting received data. The second application may be a trusted application of an electronic device (e.g., a first-party application associated with hardware of the electronic device, such as a camera, a microphone, and a GPS). The method further includes: receiving second data from the second application by the security service. In addition, the method further includes: determining third data for the electronic device by the security service based on the first data and the second data. For example, the security service of the electronic device may invoke a renderer to further render and process the received data to be rendered on a display of the electronic device. According to the method, an extended reality function can be achieved through the electronic device without direct access to the protected data, to protect privacy of users.

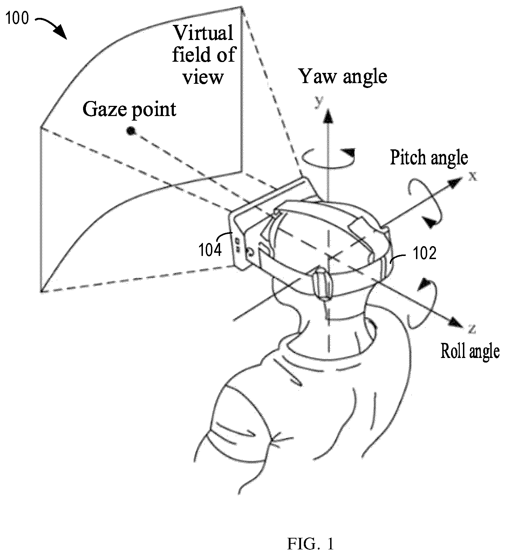

FIG. 1 is a schematic diagram of an example environment 100 in which some embodiments of the present disclosure can be implemented. As shown in FIG. 1, the example environment 100 may include one or more elements of an extended reality device 102, a display 104 of the extended reality device, a camera of the extended reality device (not shown), etc. According to the embodiments of the present disclosure, the extended reality device 102 may be a terminal device for achieving an extended reality (such as VR or MR, etc.) effect. In some embodiments, extended reality (XR) refers to combining reality with virtuality through a computer to create a virtual environment that allows for human-computer interaction. XR is also an umbrella term for a plurality of technologies such as augmented reality (AR), virtual reality (VR), and mixed reality (MR). Fusion of these three visual interaction technologies makes an experiencer "immersive" in seamless switching between a virtual world and a physical world.

It should be understood that while the extended reality device is taken as an example in some embodiments of the present disclosure, the embodiments of the present disclosure are not limited thereto, and methods implemented by the present disclosure are also applicable to other similar devices, apparatuses, hardware, systems, or platforms, including but not limited to a smartphone, a tablet, other mobile terminals, a computer system, and other hardware or software environments with similar functions. The scope of implementation of the present disclosure is therefore of broad applicability and is not narrowly limited to a particular device or scenario.

In some embodiments, the extended reality device 102 may be a device for enabling visual sensing and other forms of sensing, such as eyeglasses, a head-mounted display (HMD), contact lenses, a personal computer virtual reality (PCVR) device, an all-in-one virtual reality device, etc. By way of example, the present disclosure provides description using the head-mounted display as an example, but it should be understood that the device that can implement the methods of the present disclosure are not limited thereto.

According to the embodiments of the present disclosure, the camera of the extended reality device 102 may capture an image or video of a physical environment around a user, or capture information such as a hand gesture, a facial expression of the user in extended reality interaction. For example, the camera of the extended reality device 102 may determine information such as a layout of a room in which the user is currently located, and a road traffic condition. In some other embodiments, the sensor of the extended reality device 102 (such as a nine-axis sensor) may further collect and track user head motion data or pose data, such as a yaw angle, a pitch angle, a roll angle, etc. In yet other embodiments, the microphone device of the extended reality device 102 may further collect audio data for a current user and a surrounding environment.

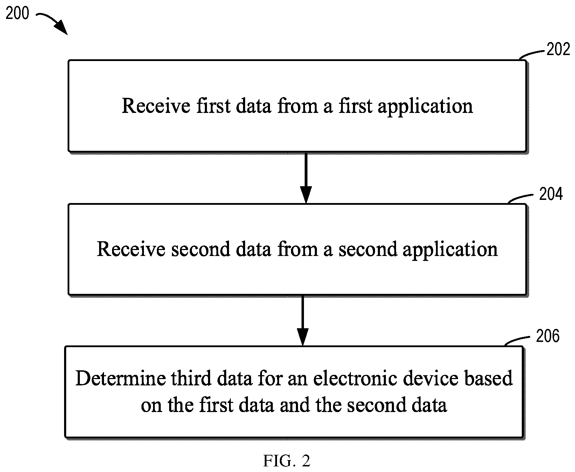

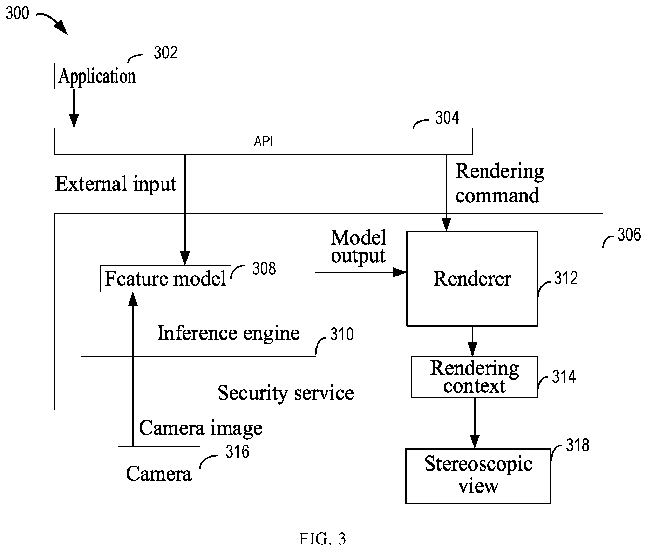

Then, collected image data may be transmitted to a processing unit of the extended reality device 102 for further processing via a data bus or an application programming interface (API). For example, the processing unit implemented according to the methods of the present disclosure may be one or more security service processes, and may receive one or more pieces of protected data from modules such as the camera, the microphone, and the GPS of the extended reality device 102, and block a third-party application, an unknown source application, etc. on the device from directly accessing the protected data. The security service process implemented in the present disclosure is further described below with reference to FIG. 2 and FIG. 3.

In some embodiments, the processing unit may process data of the third-party application, etc., based on the collected protected data. For example, the processing unit according to the present disclosure may analyze image data obtained by the camera to identify a hand position and a pose of the user and generate a corresponding control signal, to determine how the user performs an interaction operation in a virtual scene of the third-party application, for example, determine how the user selects a virtual object, moves an object, or triggers a specific virtual scene event. According to the embodiments of the present disclosure, the virtual scene may be any of a two-dimensional virtual scene, a 2.5-dimensional virtual scene, or a three-dimensional virtual scene. In some embodiments, the virtual scene may include, for example, elements such as characters, the sky, land, and the ocean. The land may further include environmental elements such as a desert and a city. The user may control a relevant object in the virtual scene to move in the virtual scene, and may also interactively control objects such as a control, a model, a display content, and a character in the virtual scene using a controller device, a bare-hand gesture, etc.

In some embodiments, the processing unit may further update a field of view of an application in real time based on head motion data from the sensor, including the yaw angle, the pitch angle, and the roll angle of the user, to match actual movement of the user's head. For example, when the user turns to the left, the processing unit may adjust a display content in the virtual field of view accordingly, so that the user can view a left region in the virtual scene. This can implement security processing of the user-protected data in the extended reality device 102 without worrying about leaking the data to any known or unknown application.

FIG. 2 is a flowchart of a method 200 for protecting data in an electronic device according to some embodiments. At block 202, first data is received from a first application. In some embodiments, the first data may be received from the first application by a security service, and the security service runs in a process or a procedure in which a processor, etc. of an electronic device further processes the received data, and blocks the first application from accessing a second application to protect data.

In some embodiments, the first application may be a user-installed third-party or unknown source data application that needs to invoke user-protected data, such as camera data, map data, microphone data, etc., of the second application, and may not be trustworthy for the electronic device, such as an extended reality device.

In some embodiments, the first data may be received from the first application by the security service in the extended reality device via an application programming interface, and the first data may include a request for calling camera or microphone data. Transmission via the application programming interface is unidirectional transmission, and the received first data may no longer be returned to the first application via the application programming interface.

In some embodiments, when the first application is an application related to a model, for example, when the first application may be an application that needs to render, rendered infer, and generate an image or video using the model, data received from the first application may include data of the model. In other words, the data of the model may be converted to a format suitable for an inference engine in the security service. In some embodiments, data received from the first application may further include input data of the first application to the model, data indicating one or more content to be rendered (e.g., which portions of the input data to be rendered), and data indicating a method for rendering using second data (e.g., a method for rendering using the camera data).

At block 204, the second data is received from the second application. According to the embodiments of the present disclosure, the second application may be a first-party application associated with the extended reality device, such as a camera, a microphone, a position gyroscope, or a GPS of the extended reality device, and these applications are trusted by the extended reality device. In some embodiments, the second data may be data generated by these first-party applications, including user information such as an image, video, audio, and text.

At block 206, third data for the electronic device is determined based on the first data and the second data. According to the embodiments of the present disclosure, the third data in an output buffer of the security service may be determined by the security service using the AI model based on the first data and the second data. In some embodiments, the first data may further include information related to an input node on the AI model that is to be connected, such as processing on a specified input node on the AI model. In some embodiments, the security service further includes a renderer, and the renderer may generate or render the third data for display on a screen of the electronic device, including multimodal data such as the image, the audio, the text, or the video. In this way, according to the embodiments of the present disclosure, the security service may receive unidirectional transmission of the data from the first application, and blocks direct data access by the first application to the second application, to protect privacy of users.

FIG. 3 is a schematic diagram of a procedure 300 of a method for protecting data according to some embodiments of the present disclosure. As shown in FIG. 3, one or more elements of an application 302, an API 304, a security service process or a security MR service 306, a camera 316, a renderer 312, a stereoscopic view 318, etc., may be included in an extended reality device implemented according to the method of the present disclosure.

The application 302 may be software running on the extended reality device, and achieves interaction between a user and an extended reality system. For example, the application 302 may be an application for displaying a three-dimensional virtual earth model or a human anatomy model to a student user. In some embodiments, the application 302 may alternatively be a mixed reality game application, and may change a position or a behavior of a virtual object according to a gesture change or a head pose of a player user, to provide real-time interaction with the player user. Additionally, or alternatively, in some embodiments, the application 302 may be a furniture design application, and may display a position of furniture placement and a corresponding effect in real time according to a user instruction.

The application 302 may provide application data associated with the application 302 to the security service process 306 via the API 304. According to the embodiments of the present disclosure, the API 304 may block the application 302 from directly accessing and obtaining data of the camera 316. In other words, the application 302 may transmit application data only unidirectionally to security service process 306 via the API 304 and cannot extract data in the security service process 306 via the API 304.

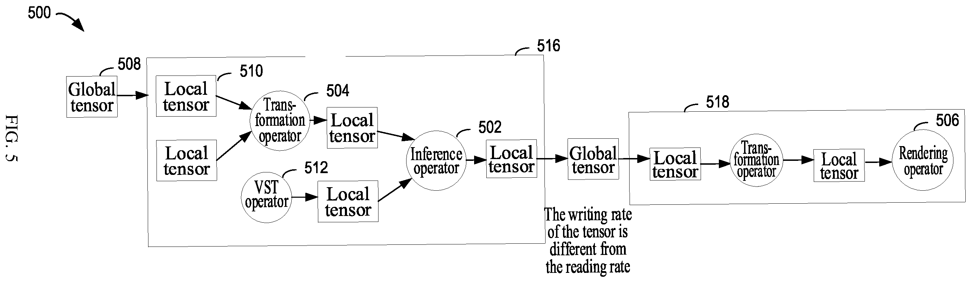

For example, in some embodiments, the application data may be processed into a tensor in the pipelined API 304, to achieve unidirectional transmission of the application data. A specific implementation of the method is described below with reference to FIG. 5. Additionally, or alternatively, in some embodiments, unidirectional transmission of the application data may be achieved by providing only a write interface to the application 302 and not providing a read interface.

According to the embodiments of the present disclosure, the application 302 may alternatively be an application that needs to perform inference using a feature model 308, such as an artificial intelligence (AI) model or a machine learning (ML) model. The application 302 may transmit data of the AI model to the security service process 306 via the API 304, and the AI model is converted to a format that can be used by an inference engine 310 in the security service process 306. According to the embodiments of the present disclosure, the inference engine 310 may be a combination of software and/or hardware for running a trained AI model. For example, in some embodiments, the inference engine 310 may be, for example, a TensorFlow Lite (TFLite)-based inference engine designed for a mobile device.

For example, according to the embodiments of the present disclosure, when the user navigates in a street using the extended reality device, the application 302 may convert a feature model 308 of an AI model for path navigation planning, etc. to a TFLite format via the API 304 and transmit the TFLite format to the security service process 306. The security service process 306 may run the path navigation planning model in its inference engine 310 and generate, based on camera image data provided by the camera 316, data desired by the user, such as a name of a building that the user is gazing at, a status of a traffic light ahead, a real-time navigation path to a desired destination, etc.

For another example, when the user wearing the extended reality device is shopping in a store, the application 302 converts a feature model 308 of a commodity identification model, etc., to a TFLite format via the API 304 and transmits the TFLite format to the security service process 306. The security service process 306 may run the converted commodity identification model in its inference engine, and determine commodity information and an associated recommendation result based on camera image data provided by the camera 316. In some embodiments, the application 302 may further provide input data (external data) for the AI model to the security service process 306. For example, when the user is shopping, external data such as a user preference, a price range, and a gazing direction of the user may be input into the model.

In some embodiments, the application 302 may further provide information related to an input node on the AI model, and a camera image input should be connected to the node. When obtaining the input node reference, the security service process 306 may connect the camera image input to a correct position on the AI model for running. For example, when the user navigates, the input node may include requirements for a format and an update frequency of an input image. When obtaining the input node reference, the security service process 306 may generate a real-time navigation map that meets the requirements for the format and the update frequency.

According to the embodiments of the present disclosure, model inference data processed by the feature model 308 may be transmitted to an output buffer in the security service process 306 for temporary storage. Then, the renderer 312 in the security service process 306 may perform rendering based on the model inference data, a rendering command from the application 302, and a rendering context 314, and generate the stereoscopic view 318 suitable for display on the extended reality device. For example, the render command may include data describing a content that the application 302 desires to render (e.g., data in gltf format), and how to present something using an inference data result (e.g., provide a gltf rendering position using the inference data result).

For example, a rendering command from the application 302 in a navigation application may describe a display manner of a navigation path, such as using a 3D arrow model in gltf format, and specifying an arrow color and size. The rendering context may include information such as position information of the extended reality device, a user angle of view, and a lighting condition. The renderer 312 may generate, based on these data, the stereoscopic view 318, including the navigational path, suitable for display on the extended reality device.

For another example, the application 302 may be a classification application, and may be used for a classification model in a readable format for the inference engine 310 in the security service process 306, and an inference result of the classification model is a label of an object with the largest confidence value identified in an image. In some embodiments, the application 302 may further send, to the security service process 306, information indicating that an input of the classification model is set as an implicit input of the camera image, and send, to the security service process 306, information indicating that an output of the classification model is set as transmission to the rendering command using a pipeline. The command may be used to render output text. Finally, the application 302 may display text of the content identified in a scene in front of the user to the user through the display of the extended reality device.

In some embodiments, the application 302 may send an ML model for identifying a face of a person in the image input to the security service process 306, and an inference result of the model is a head pose of the person. In some embodiments, the application 302 may further send, to the security service process 306, information indicating that an input of the ML model is set as an implicit input of the camera image. In some embodiments, the application 302 may further send Gltf data including a three-dimensional grid and material related to a real-person-size head-mounted device to the security service process 306. In some embodiments, the application 302 may further send, to the security service process 306, information indicating that an output head pose of the ML model is set and is transmitted to a rendering command, and the rendering command may be used to position and render gltf using the pose. The method implemented in the present disclosure implements security processing of the user-protected data in the extended reality device without worrying about leaking the data to any known or unknown application.

A method mechanism implemented in the present disclosure may also allow external developers to run any ML model selected by the external developers on the camera image provided by the extended reality device without exposing the camera image or any sensitive data directly to the developers. The customized ML model of the external developer is run in a privileged security zone of an operating system of the extended reality device, and any output is not allowed to be transmitted back to the application developer.

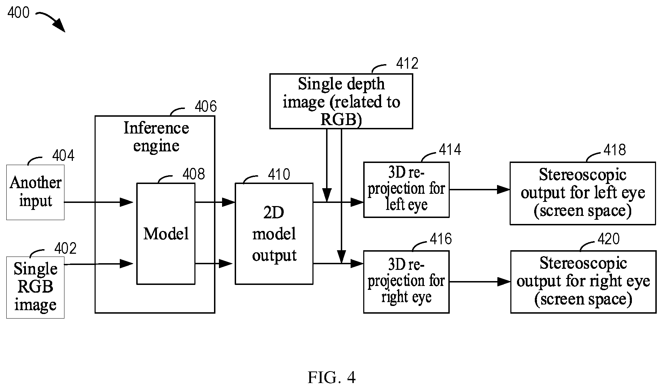

FIG. 4 is a schematic diagram of a procedure 400 of a method for rendering a stereoscopic view according to some embodiments of the present disclosure. In some scenarios, an AI/ML model is usually suitable for a two-dimensional image or video, and presents an output related to a source image or video in a two-dimensional form. For example, for face detection, when an image with a face is provided as input, an inference result is bounding box coordinates of a detected face relative to a range of the source image. Unlike a mobile device, an output of an extended reality device is a stereoscopic view, and presents a different image to each eye when rendering any output to explain a three-dimensional appearance of the world.

According to the embodiments of the present disclosure, a depth map (e.g., obtained from a hardware sensor such as time of flight (ToF), or running a small ML model on the source image) may be used to align the depth map with the source image, and then a set of any (plurality of) points of interest in the source image is mapped to three-dimensional world coordinates by considering a three-dimensional pose of a camera and a depth of a point of interest in a camera view. An object of interest can then be rendered at this position using the three-dimensional coordinates, and a stereoscopic view projection is used to obtain a final result.

As shown in FIG. 4, in some embodiments, an AI model 408 running in an inference engine 406 of the extended reality device may receive single RGB image data 402 captured or taken from the camera to obtain basic visual information for determining the view. In some embodiments, the AI model 408 may further receive other input data 404, such as data information like a camera parameter related to an environment, a scene characteristic, etc., to improve understanding of the current view and accuracy of system inference.

According to the embodiments of the present disclosure, the AI model 408 may perform operations such as feature extraction and depth estimation on the input RGB image 402, for example, identifying features such as an object, a texture, and an edge in the input image, and finally generate a two-dimensional model output 410, where the output may be used to describe information such as a main feature and a corresponding position in the image.

Specifically, in some embodiments, a raw RGB input from a fisheye camera is distorted, so the input may be converted to be in an (Re)UV-based space coordinate system. Because the raw fisheye image is re-projected onto ReUV space, a raw parameter of the fisheye camera is no longer valid for a corrected image. An equivalent pinhole camera model may thus be provided according to the following formula:

$$Re\left(F_{fisheye}\left(V_{fisheye} X_{world}\right)\right) \equiv P_{pinhole} V_{pinhole} X_{world} \tag{1}$$

where Re is correction mapping, $F_{fisheye}$ is a nonlinear projection of a real VST camera, $P_{pinhole}$ represents an intrinsic matrix of the pinhole camera, and $V_{fisheye}$ and $V_{pinhole}$ represent two view matrices respectively. $X_{world}$ is coordinates in world space.

In addition,

$$V pinhole = \begin{bmatrix} fx & 0 & cx \\ 0 & fy & cy \\ 0 & 0 & 1 \end{bmatrix} \tag{2}$$

where $fx$ and $fy$ are focal lengths of the pinhole camera in x and y directions. $cx$ and $cy$ are x and y coordinates of a center of the image, that is, a center position of a camera image plane.

In some embodiments, $f_x = \dfrac{1}{\tan(\alpha)}$ and $f_y = \dfrac{1}{aspect \times \tan(\alpha)}$, where $\alpha$ is a half of a horizontal field of view (FOV).

In some embodiments, the two-dimensional model output 410 may be combined with depth information from the depth map 412 for re-projection. For example, view space of the equivalent pinhole camera may be extended to homogenous coordinates, then:

$$\begin{bmatrix} x' \\ y' \\ z' \\ w \end{bmatrix} = \begin{bmatrix} \dfrac{1}{\tan(\alpha)} & 0 & 0 & 0 \\ 0 & \dfrac{1}{aspect \times \tan(\alpha)} & 0 & 0 \\ 0 & 0 & 1 & 0 \\ 0 & 0 & 1 & 0 \end{bmatrix} \begin{bmatrix} x \\ y \\ z \\ 1 \end{bmatrix} \tag{3}$$

where x'=$u_n$w, y'=$v_n$w, FOV=$\alpha$, and an aspect ratio=aspect. $W$ is a determined depth given by the tof sensor. The projection matrix is used in depth remapping and may be used to transform view space coordinates. Specifically, an inverse projection, that is, an inverse equivalent camera space, may be performed:

$$\begin{bmatrix} x' \\ y' \\ z' \\ w \end{bmatrix} = Proj \cdot \begin{bmatrix} x \\ y \\ z \\ 1 \end{bmatrix}$$

(4)

Herein:

$$x = \frac{u_n - \text{Proj}[1][3]z}{\text{Proj}[1][1]} \quad ; \quad y = \frac{v_n - \text{Proj}[2][3]z}{\text{Proj}[2][2]}$$

(5)

In this way, normalized ReUV may be converted to view space of an equivalent camera.

In some embodiments, the equivalent camera space may alternatively be converted to view space. The equivalent camera includes an extrinsic matrix describing its pose in IMU space. A head model describes transformation between IMU and a rendering reference point (that is, a center of two eyes, which is also a position to which an origin of the view space is attached). Based on these data and the above steps, data collected by the camera may be converted to three-dimensional re-projections 414 and 416 for left and right eyes, and stereoscopic image outputs 418 and 420 for the left and right eyes are generated for display on a screen based on the re-projections 414 and 416. With the respective image outputs of the left and right eyes, the extended reality device may provide the user with a highly restored three-dimensional stereoscopic view effect, thereby enhancing immersive experience of the user.

FIG. 5 is a schematic diagram of a procedure 500 of a method for processing data according to some embodiments of the present disclosure. In order to implement a method for protecting data applied to a security process in the present disclosure, the data may be further processed and a format is converted for presentation.

For example, according to the embodiments of the present disclosure, received data such as a camera image, audio, text, and user position information may be converted to a form of atomic components, and these different types of atomic components may be defined as tensors in the present disclosure. According to the embodiments of the present disclosure, the tensor can only be written from an application side, and the application cannot read the tensor, which can protect privacy of the user. In some embodiments, a data type of the tensor may be limited to a data type supported by the security service process, such as an abstract scalar, a point, a vector, a matrix, an image, etc.

According to the embodiments of the present disclosure, the application may create a tensor, but once created, the application cannot read the tensor. The tensor is used to transmit intermediate data during frame running, but the application cannot read any data at any time. In some embodiments, the tensor may alternatively be implicit (or created by a security service process framework). In this case, the application can never access data generated by the application, but the application can request to use the data during frame running. For example, the tensor may be data read from the camera image as described above (video see-through, VST tensor). Such a restriction helps ensure security and privacy of data flowing through the framework. According to the embodiments of the present disclosure, the framework may include elements such as the security service process and an API.

According to the embodiments of the present disclosure, the step of converting or operating the tensor may be limited to an operator (operator). According to the embodiments of the present disclosure, the operator may have 0 or more data inputs, and these inputs are referred to as operands (operand). The operator may have 0 or more pieces of output data, referred to as a result. For example, each operand may be a tensor or a reference to a tensor, and the same is true for each result.

According to the embodiments of the present disclosure, the operator may be an engine of the security services framework. In other words, all that need to be done is done by the operator. According to the embodiments of the present disclosure, model inference may be performed within the framework using an inference operator 502. For example, some input data may be obtained and converted to some available output data using an AI/ML model based on the inference operator 502.

In some embodiments, a data transformation operator 504 may also be used for data processing. For example, in some examples, a model input needs to be pre-processed to be displayed in a format desired by the model. A model output requires further processing to obtain data to be rendered. In some embodiments, processed data may also be rendered using a rendering operator 506 because no processed data can be transmitted to the application. It should be understood that in this case, a rendering result is actually a by-product rather than an actual data output. In some embodiments, the present disclosure may further include a VST operator 512 for processing VST data.

According to the embodiments of the present disclosure, the above operations may occur in pipelines 516 and 518 of the framework. In some embodiments, the pipeline is a collection of atomic components (tensors and operators) that run in sequence. The pipelines may form a directed acyclic graph (or DAG) to allow different types of data processing. The pipeline is also considered to run within an execution scope of the pipeline. In some embodiments, all tensors within the pipeline are local tensors 510 that cannot be accessed by the outside of the pipeline and do not conflict with or share resources with a local tensor 510 of any other pipeline.

Additionally, or alternatively, a global tensor 508 located outside any pipeline may be further created and is connected to an input of any operator in the pipeline or to an output of any operator in the pipeline. Therefore, an external input or output method may be provided to the pipeline, and a method for synchronizing different pipelines may also be coordinated. Some operations may also be performed at different frame rates from other operations through a plurality of pipelines. For example, an inference pipeline may be created and includes a model inference operator 502 and another data transformation operator 504 that runs at 10 fps. The pipeline may output a position of an object to a global tensor that is updated only at the frame rate. In addition, another pipeline may use the global tensor as an input to render a digital twin mesh to a latest value of a position inferred at 90 fps.

For example, the application may first create a framework instance and use the framework instance to create the pipeline 516. The application may then create a global data tensor from existing data, or use an implicit data operator to transfer an input to the pipeline 516. Then, the application converts data to other data using an operator created in the pipeline, all done with the local tensor 510. Finally, the application may create a global tensor from an output of one of the tensors, and transfer the global tensor for an input of another pipeline 518 or as a condition for running another pipeline. Additionally, or alternatively, the pipeline may also be caused to output some rendering to the VST.

In some embodiments, a plurality of pipelines that may run and interact with each other may also be created. For example, the pipeline may be created to ensure that all inputs and outputs of the pipeline are set, and then the API is called to execute the pipeline. This call may send a graph associated with the pipeline to a task list. Additionally, or alternatively, in some embodiments, the pipeline may also be run conditionally using different parameters for call and execution based on a running completion status of another pipeline or a value of the global tensor.

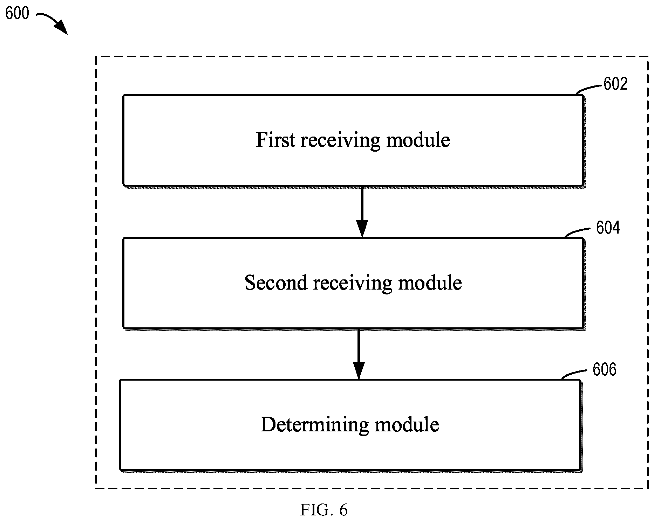

FIG. 6 shows an apparatus for protecting data in an electronic device. As shown in FIG. 6, the apparatus 600 includes a first receiving module 602 configured to receive first data from a first application by a security service, where the security service blocks the first application from accessing a second application to protect data. The apparatus further includes a second receiving module 604 configured to receive second data from the second application by the security service. In addition, the apparatus further includes a determining module 606 configured to determine third data for the electronic device by the security service based on the first data and the second data.

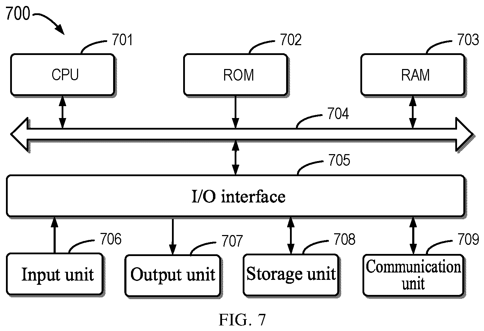

FIG. 7 is a block diagram of an electronic device 700 according to some embodiments of the present disclosure. The device 700 may be a device or an apparatus described in the embodiments of the present disclosure. As shown in FIG. 7, the device 700 includes a central processing unit (CPU) and/or graphics processing unit (GPU) 701 that may perform a variety of appropriate actions and processing in accordance with computer program instructions stored in a read-only memory (ROM) 702 or computer program instructions loaded from a storage unit 708 into a random-access memory (RAM) 703. The RAM 703 may further store various programs and data required for the operation of the device 700. The CPU/GPU 701, the ROM 702, and the RAM 703 are connected to each other via a bus 708. An input/output (I/O) interface 705 is also connected to the bus 704. Although not shown in FIG. 7, the device 700 may further include a coprocessor.

A plurality of components in the device 700 are connected to the I/O interface 705, including: an input unit 706, such as a keyboard or a mouse; an output unit 707, such as various types of displays or speakers; a storage unit 708, such as a magnetic disk or an optical disc; and a communication unit 709, such as a network interface card, a modem, or a wireless communication transceiver. The communication unit 709 allows the device 700 to exchange information/data with other devices over a computer network such as the Internet and/or various telecommunication networks.

Each method or process described above may be performed by the CPU/GPU 701. For example, in some embodiments, the method may be implemented as a computer software program, which is tangibly contained in a machine-readable medium, such as the storage unit 708. In some embodiments, a part or all of the computer program may be loaded and/or installed onto the device 700 via the ROM 702 and/or the communication unit 709. When the computer program is loaded into the RAM 703 and executed by the CPU/GPU 701, one or more steps or actions in the method or process described above may be performed.

In some embodiments, the methods and processes described above may be implemented as a computer program product. The computer program product may include a computer-readable storage medium on which computer-readable program instructions for performing various aspects of the present disclosure are carried.

The computer-readable storage medium may be a tangible device that can retain and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples of the computer-readable storage medium (a non-exhaustive list) include: a portable computer disk, a hard disk, a random-access memory (RAM), a read-only memory (ROM), an erasable programmable read-only memory (EPROM) (or a flash memory), a static random-access memory (SRAM), a portable compact disk read-only memory (CD-ROM), a digital versatile disk (DVD), a memory stick, a floppy disk, a mechanical coding device, a punched card or an in-groove raised structure on which instructions are for example stored, and any suitable combination thereof. The computer-readable storage medium used herein is not to be interpreted as a transient signal, such as a radio wave or another freely propagating electromagnetic wave, an electromagnetic wave propagating through a waveguide or another transmission medium (e.g., an optical pulse through a fiber-optic cable), or an electrical signal transmitted over a wire.

The computer-readable program instructions described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or network interface in each computing/-processing device receives computer-readable program instructions from the network, and forwards the computer-readable program instructions for storage in the computer-readable storage medium in each computing/processing device.

The computer program instructions for performing the operations of the present disclosure may be assembly instructions, Instruction Set Architecture (ISA) instructions, machine instructions, machine-related instructions, microcode, firmware instructions, status setting data, or source code or object code written in any combination of one or more programming languages, including object-oriented programming languages as well as conventional procedural programming languages. The computer-readable program instructions may be completely executed on a computer of a user, partially executed on a computer of a user, executed as an independent software package, partially executed on a computer of a user and partially executed on a remote computer, or completely executed on a remote computer or server. In a case of the remote computer, the remote computer may be connected to the computer of the user through any kind of network, including a local area network (LAN) or a wide area network (WAN), or may be connected to an external computer (for example, connected through the Internet with the aid of an Internet service provider). In some embodiments, an electronic circuit, such as a programmable logic circuit, a field programmable gate array (FPGA), or a programmable logic array (PLA), is personalized by using state information of the computer-readable program instructions. The electronic circuit may execute the computer-readable program instructions to implement various aspects of the present disclosure.

These computer-readable program instructions may be provided to a processing unit of a general-purpose computer, a special-purpose computer, or another programmable data processing apparatus to produce a machine, such that the instructions, when executed by the processing unit of the computer or the other programmable data processing apparatus, create an apparatus for implementing functions/actions specified in one or more blocks in the flowchart and/or the block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowchart and/or the block diagrams.

Alternatively, the computer-readable program instructions may be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement functions/actions specified in one or more blocks in the flowchart and/or the block diagrams.

The flowcharts and the block diagrams in the drawings illustrate possible system architectures, functions, and operations of the device, the method, and the computer program product according to a plurality of embodiments of the present disclosure. In this regard, each block in the flowcharts or the block diagrams may represent a part of a module, a program segment, or an instruction. The part of the module, the program segment, or the instruction includes one or more executable instructions for implementing a specified logical function. In some alternative implementations, functions marked in the blocks may occur in a sequence different from that marked in the drawings. For example, two consecutive blocks may actually be executed substantially in parallel, or may sometimes be executed in a reverse order, depending on a function involved. It should also be noted that each block in the block diagrams and/or the flowcharts, and a combination of the blocks in the block diagrams and/or the flowcharts may be implemented by a dedicated hardware-based system that executes specified functions or actions, or may be implemented by a combination of dedicated hardware and computer instructions.

Various embodiments of the present disclosure have been described above. The foregoing descriptions are exemplary, not exhaustive, and are not limited to the disclosed embodiments. Many modifications and changes would be clear to those of ordinary skill in the art without departing from the scope of the described embodiments. The selection of the terms used herein is intended to best explain the principles, practical applications, or technical improvements to technologies in the market of the embodiments, or to enable others of ordinary skill in the art to understand the embodiments disclosed herein.

Some example implementations of the present disclosure are listed below.

Example 1. A method for protecting data in an electronic device, including:

receiving first data from a first application by a security service, where the security service blocks the first application from accessing a second application to protect data;

receiving second data from the second application by the security service; and

determining third data for the electronic device by the security service based on the first data and the second data.

Example 2. The method according to Example 1, where receiving the first data from the first application includes: receiving the first data by the security service via an application programming interface, where the application programming interface blocks the second data and the third data from being returned to the first application.

Example 3. The method according to any of Examples 1 and 2, where receiving the first data from the first application further includes:
in response to the first application being an application related to a model, receiving, from the first application, at least one of the following:

data of the model, where the data of the model is converted to a format suitable for an inference engine in the security service;

data input to the model;

data indicating one or more contents to be rendered; and

data indicating a method for rendering using the second data.

Example 4. The method according to any of Examples 1 to 3, where determining the third data for the electronic device based on the first data and the second data includes:

determining the third data in an output buffer of the security service using the AI model based on the first data and the second data, where

the first data includes at least information related to an input node on the AI model that is to be connected.

Example 5. The method according to any of Examples 1 to 4, where determining the third data for the electronic device based on the first data and the second data further includes:
generating, based on the third data using a renderer of the security service, an image, audio, text, or video for display on a screen of the electronic device.

Example 6. The method according to any of Examples 1 to 5, where

the electronic device is an extended reality device;

the first application is an application associated with the extended reality; and

the security service is included in the electronic device.

Example 7. The method according to any one of Examples 1 to 6, further including:

obtaining a source image;

obtaining a depth map associated with the source image, where the depth map includes depth information for each point in the source image; and

determining a 3D model based on the depth map and the source image.

Example 8. The method according to any one of examples 1 to 7, where determining the 3D model based on the depth map includes:

aligning the depth map with the source image;

determining the depth information for a point of interest set of the source image based on the aligned depth map;

determining 3D coordinates of the point of interest set based on the depth information and a 3D pose of a camera capturing the source image in the electronic device; and

determining the 3D model based on the 3D coordinates of the point of interestset.

Example 9. The method according to any of Examples 1 to 8, where the depth map is determined based on at least one of the following:

a time-of-flight sensor of the electronic device, where the time-of-flight sensor is configured to measure depth information for each pixel in the source image; or

the model of the electronic device, where the model is configured to perform depth estimation on the source image.

Example 10. The method according to any of Examples 1 to 9, where determining the 3D model based on the depth map further includes:

determining an intrinsic matrix and an extrinsic matrix of an equivalent pinhole camera based on information related to the camera, where the intrinsic matrix includes at least a focal length and coordinates of the equivalent pinhole camera, and the extrinsic matrix includes at least a position and a direction of the equivalent pinhole camera; and

determining the 3D coordinates based on the intrinsic matrix and the extrinsic matrix of the equivalent pinhole camera.

Example 11. The method according to any of Examples 1 to 10, where determining the third data for the electronic device based on the first data and the second data further includes:

receiving the first data using a tensor;

processing the tensor using an operator; and

determining the third data based on the processed tensor.

Example 12. The method according to any of Examples 1 to 11, where the tensor is included in a pipeline, and the tensor includes at least one of a global tensor or a local tensor; and
the global tensor transmits data between different pipelines, and the local tensor transmits data in a single pipeline and is not externally accessed.

Example 13. The method according to any of Examples 1 to 12, where the operator includes at least one of a model inference operator, a data transformation operator, and a rendering operator,

the model inference operator is configured to perform inference on the tensor based on the model,

the data transformation operator is configured to convert a format of the tensor to meet a requirement of the model, and

the rendering operator is configured to output the converted tensor for rendering and display.

Example 14. The method according to any of Examples 1 to 13, where a reading rate of the pipeline for the global tensor is different from a writing rate of the pipeline for the global tensor.
Example 15. An electronic device, including:

a memory and a processor;

where the memory is configured to store one or more computer instructions that, when executed by the processor, cause the processor to:

receive first data from a first application by a security service, where the security service blocks the first application from accessing a second application to protect data;

receive second data from the second application by the security service; and

determine third data for the electronic device by the security service based on the first data and the second data.

Example 16. The device according to Example 15, where the instructions that cause the processor to receive the first data from the first application include instructions that cause the processor to perform the following operation: receiving the first data by the security service via an application programming interface, where the application programming interface blocks the second data and the third data from being returned to the first application.

Example 17. The device according to either of Examples 15 and 16, where the instructions that cause the processor to receive the first data from the first application further include instructions that cause the processor to perform the following operation:

in response to the first application being an application related to a model, receiving, from the first application, at least one of the following:

data of the model, where the data of the model is converted to a format suitable for an inference engine in the security service;

data input to the model;

data indicating one or more contents to be rendered; and

data indicating a method for rendering using the second data.

Example 18. The device according to any of Examples 15 to 17, where causing the processor to determine the third data for the electronic device based on the first data and the second data includes instructions that cause the processor to perform the following operation:

determining the third data in an output buffer of the security service using the AI model based on the first data and the second data, where

the first data includes at least information related to an input node on the AI model that is to be connected.

Example 19. The device according to any of Examples 15 to 18, where causing the processor to determine the third data for the electronic device based on the first data and the second data further includes instructions that cause the processor to perform the following operation:
generating, based on the third data using a renderer of the security service, an image, audio, text, or video for display on a screen of the electronic device.

Example 20. The device according to any of Examples 15 to 19, where

the electronic device is an extended reality device;

the first application is an application associated with the extended reality; and

the security service is included in the electronic device.

Example 21. The device according to any of Examples 15 to 21, further including:

obtaining a source image;

obtaining a depth map associated with the source image, where the depth map includes depth information for each point in the source image; and

determining a 3D model based on the depth map and the source image.

Example 22. The device according to any of Examples 15 to 21, where determining the 3D model based on the depth map includes:

aligning the depth map with the source image;

determining the depth information for a point of interest set of the source image based on the aligned depth map;

determining 3D coordinates of the point of interest set based on the depth information and a 3D pose of a camera capturing the source image in the electronic device; and

determining the 3D model based on the 3D coordinates of the point of interest set.

Example 23. The device according to any of Examples 15 to 22, where the depth map is determined based on at least one of the following:

a time-of-flight sensor of the electronic device, where the time-of-flight sensor is configured to measure depth information for each pixel in the source image; or

the model of the electronic device, where the model is configured to perform depth estimation on the source image.

Example 24. The device according to any of Examples 15 to 23, where determining the 3D model based on the depth map further includes:

determining an intrinsic matrix and an extrinsic matrix of an equivalent pinhole camera based on information related to the camera, where the intrinsic matrix includes at least a focal length and coordinates of the equivalent pinhole camera, and the extrinsic matrix includes at least a position and a direction of the equivalent pinhole camera; and

determining the 3D coordinates based on the intrinsic matrix and the extrinsic matrix of the equivalent pinhole camera.

Example 25. The device according to any of Examples 15 to 24, where determining the third data for the electronic device based on the first data and the second data further includes:

receiving the first data using a tensor;

processing the tensor using an operator; and

determining the third data based on the processed tensor.

Example 26. The device according to any of Examples 15 to 25, where the tensor is included in a pipeline, and the tensor includes at least one of a global tensor or a local tensor; and
the global tensor transmits data between different pipelines, and the local tensor transmits data in a single pipeline and is not externally accessed.

Example 27. The device according to any of Examples 15 to 26, where the operator includes at least one of a model inference operator, a data transformation operator, and a rendering operator,

the model inference operator is configured to perform inference on the tensor based on the model,

the data transformation operator is configured to convert a format of the tensor to meet a requirement of the model, and

the rendering operator is configured to output the converted tensor for rendering and display.

Example 28. The device according to any of Examples 15 to 27, where a reading rate of the pipeline for the global tensor is different from a writing rate of the pipeline for the global tensor.

Example 29. An apparatus for protecting data in an electronic device, including:

a first receiving module configured to receive first data from a first application by a security service, where the security service blocks the first application from accessing a second application to protect data;

a second receiving module configured to receive second data from the second application by the security service; and

a determining module configured to determine third data for the electronic device by the security service based on the first data and the second data.

Example 30. The apparatus according to Example 29, where instructions for receiving the first data from the first application include:

a first receiving module configured to receive the first data by the security service via an application programming interface, where the application programming interface blocks the second data and the third data from being returned to the first application.

Example 31. The apparatus according to either of Examples 29 and 30, where receiving the first data from the first application includes:

in response to the first application being an application related to a model, receiving, from the first application, at least one of the following:

data of the model, where the data of the model is converted to a format suitable for an inference engine in the security service;

data input to the AI model;

data indicating one or more contents to be rendered; and

data indicating a method for rendering using the second data.

Example 32. The apparatus according to any of Examples 29 to 31, where determining the third data for the electronic device based on the first data and the second data includes:

a determining module configured to determine the third data in an output buffer of the security service using the AI model based on the first data and the second data, where the first data includes at least information related to an input node on the AI model that is to be connected.

Example 33. The apparatus according to any of Examples 29 to 32, where determining the third data for the electronic device based on the first data and the second data further includes:

a rendering module configured to generate, based on the third data using a renderer of the security service, an image, audio, text, or video for display on a screen of the electronic device.

Example 34. The apparatus according to any of Examples 29 to 33, where

the electronic device is an extended reality device;

the first application is an application associated with the extended reality; and

the security service is included in the electronic device.

Example 35. The apparatus according to any of Examples 29 to 34, further including:

a first obtaining module configured to obtain a source image;

a second obtaining module configured to obtain a depth map associated with the source image, where the depth map includes depth information for each point in the source image; and

a 3D model determining module configured to determine a 3D model based on the depth map and the source image.

Example 36. The apparatus according to any of Examples 29 to 35, where determining the 3D model based on the depth map includes:

an alignment module configured to align the depth map with the source image;

a depth information determining module configured to determine the depth information for a point of interest set of the source image based on the aligned depth map;

a 3D coordinate determining module configured to determine 3D coordinates of the point of interest set based on the depth information and a 3D pose of a camera capturing the source image in the electronic device; and

a 3D model determining module configured to determine the 3D model based on the 3D coordinates of the point of interest set.

Example 37. The apparatus according to any of Examples 29 to 36, where the depth map is determined based on at least one of the following:

a time-of-flight sensor of the electronic device, where the time-of-flight sensor is configured to measure depth information for each pixel in the source image; or

the model of the electronic device, where the model is configured to perform depth estimation on the source image.

Example 38. The apparatus according to any of examples 29 to 37, where determining the 3D model based on the depth map further includes:

a matrix determining module configured to determine an intrinsic matrix and an extrinsic matrix of an equivalent pinhole camera based on information related to the camera, where the intrinsic matrix includes at least a focal length and coordinates of the equivalent pinhole camera, and the extrinsic matrix includes at least a position and a direction of the equivalent pinhole camera; and

the 3D coordinate determining module configured to determine the 3D coordinates based on the intrinsic matrix and the extrinsic matrix of the equivalent pinhole camera.

Example 39. The apparatus according to any of Examples 29 to 38, where determining the third data for the electronic device based on the first data and the second data further includes:

a tensor receiving module configured to receive the first data using a tensor;

a processing module configured to process the tensor using an operator; and

a determining module configured to determine the third data based on the processed tensor.

Example 40. The apparatus according to any of Examples 29 to 39, where the tensor is included in a pipeline, and the tensor includes at least one of a global tensor or a local tensor; and
the global tensor transmits data between different pipelines, and the local tensor transmits data in a single pipeline and is not externally accessed.
Example 41. The apparatus according to any of Examples 29 to 40, where the operator includes at least one of a model inference operator, a data transformation operator, and a rendering operator,

the model inference operator is configured to perform inference on the tensor based on the model,

the data transformation operator is configured to convert a format of the tensor to meet a requirement of the model, and

the rendering operator is configured to output the converted tensor for rendering and display.

Example 42. The apparatus according to any of Examples 29 to 41, where a reading rate of the pipeline for the global tensor is different from a writing rate of the pipeline for the global tensor.
Example 43. A computer-readable storage medium having stored thereon computer-executable instructions, where the computer executable instructions are executed by a processor to implement the method according to any of Examples 1 to 14.
Example 44. A computer program product tangibly stored on a computer-readable medium and including computer-executable instructions that, when executed by a device, cause the device to perform the method according to any of Examples 1 to 14.
Although the present disclosure has been described using a language specific to structural features and/or method logical actions, it should be understood that the subject matter defined in the appended claims is not necessarily limited to the specific features or actions described above. In contrast, the specific features and actions described above are merely example forms of implementing the claims.

**Claims**

1.  A method (200) for protecting data in an electronic device, comprising:

    receiving (202) first data from a first application by a security service, wherein the security service blocks the first application from accessing a second application to protect data;
    receiving (204) second data from the second application by the security service; and
    determining (206) third data for the electronic device by the security service based on the first data and the second data.

2.  The method (200) according to claim 1, wherein receiving the first data from the first application comprises:
    receiving the first data by the security service via an application programming interface, wherein the application programming interface blocks the second data and the third data from being returned to the first application.

3.  The method (200) according to claim 1, wherein receiving the first data from the first application further comprises:
    in response to the first application being an application related to a model, receiving, from the first application, at least one of the following:

    data of the model, wherein the data of the model is converted to a format suitable for an inference engine in the security service;
    data input to the model;
    data indicating one or more contents to be rendered; and
    data indicating a method for rendering using the second data.

4.  The method (200) according to claim 3, wherein determining the third data for the electronic device based on the first data and the second data comprises:

    determining the third data in an output buffer of the security service using the AI model based on the first data and the second data; and
    wherein the first data comprises at least information related to an input node on the AI model that is to be connected.

5.  The method (200) according to claim 1, wherein determining the third data for the electronic device based on the first data and the second data further comprises:
    generating, based on the third data using a renderer of the security service, an image, audio, text, or video for display on a screen of the electronic device.

6.  The method (200) according to claim 1, wherein:

    the electronic device is an extended reality device;
    the first application is an application associated with the extended reality; and
    the security service is comprised in the electronic device.

7.  The method (200) according to claim 1, further comprising:

    obtaining a source image;
    obtaining a depth map associated with the source image, wherein the depth map comprises depth information for each point in the source image; and
    determining a 3D model based on the depth map and the source image.

8.  The method (200) according to claim 7, wherein determining the 3D model based on the depth map comprises:

    aligning the depth map with the source image;

determining the depth information for a point of interest set of the source image based on the aligned depth map;
determining 3D coordinates of the point of interest set based on the depth information and a 3D pose of a camera capturing the source image in the electronic device; and
determining the 3D model based on the 3D coordinates of the point of interest set.

9. The method (200) according to claim 7, wherein the depth map is determined based on at least one of the following:

a time-of-flight sensor of the electronic device, wherein the time-of-flight sensor is configured to measure depth information for each pixel in the source image; or
the model of the electronic device, wherein the model is configured to perform depth estimation on the source image.

10. The method (200) according to claim 8, wherein determining the 3D model based on the depth map further comprises:

determining an intrinsic matrix and an extrinsic matrix of an equivalent pinhole camera based on information related to the camera, wherein the intrinsic matrix comprises at least a focal length and coordinates of the equivalent pinhole camera, and the extrinsic matrix comprises at least a position and a direction of the equivalent pinhole camera; and
determining the 3D coordinates based on the intrinsic matrix and the extrinsic matrix of the equivalent pinhole camera.

11. The method (200) according to claim 1, wherein determining the third data for the electronic device based on the first data and the second data further comprises:

receiving the first data using a tensor;
processing the tensor using an operator;
determining the third data based on the processed tensor;
wherein the tensor is comprised in a pipeline, and the tensor comprises at least one of a global tensor or a local tensor; and
the global tensor transmits data between different pipelines, and the local tensor transmits data in a single pipeline and is not externally accessed.

12. The method (200) according to claim 11, wherein the operator comprises at least one of a model inference operator, a data transformation operator, and a rendering operator,

the model inference operator is configured to perform inference on the tensor based on the model,
the data transformation operator is configured to convert a format of the tensor to meet a requirement of the model, and
the rendering operator is configured to output the converted tensor for rendering and display.

13. The method (200) according to claim 12, wherein a reading rate of the pipeline for the global tensor is different from a writing rate of the pipeline for the global tensor.

14. An electronic device (700), comprising:

a processor; and
a memory coupled to the processor, wherein the memory has stored therein instructions that, when executed by the processor, cause the electronic device to perform the method according to any of claims 1 to 13.

15. A computer program product tangibly stored on a non-transitory computer-readable medium and comprising machine-executable instructions that, when executed, cause a machine to perform the method according to any of claims 1 to 13.

FIG. 1

200

202
Receive first data from a first application

204
Receive second data from a second application

206
Determine third data for an electronic device based on the first data and the second data

FIG. 2

300

302

Application

304

API

External input

Rendering command

306

Model output

Feature model 308

Renderer 312

Inference engine 310

Security service

Rendering context 314

Camera image

316

Camera

Stereoscopic view 318

FIG. 3

400

404

**Another input**

402

**Single RGB image**

406

**Inference engine**

408

**Model**

412

**Single depth image (related to RGB)**

410

**2D model output**

414

**3D re-projection for left eye**

416

**3D re-projection for right eye**

418

**Stereoscopic output for left eye (screen space)**

420

**Stereoscopic output for right eye (screen space)**

FIG. 4

FIG. 5

The writing rate of the tensor is different from the reading rate

600

602

First receiving module

604

Second receiving module

606

Determining module

FIG. 6

700

701
702
703

CPU | ROM | RAM

704

705

I/O interface

706 | 707 | 708 | 709

Input unit | Output unit | Storage unit | Communication unit

FIG. 7

Europäisches
Patentamt

European
Patent Office

Office européen
des brevets

# EUROPEAN SEARCH REPORT

**Application Number**

EP 25 20 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 634 549 A (NVIDIA CORP) 1 March 2024 (2024-03-01) * paragraph [0159] * * paragraph [0177] * * paragraph [0189] * * paragraph [0442] * * paragraph [0573] * * paragraph [0588] - paragraph [0589] * ----- | 1-15 | INV. G06F21/62 |
| A | CN 118 475 901 A (SAMSUNG ELECTRONICS CO LTD) 9 August 2024 (2024-08-09) * the whole document * ----- | 1-15 | |
| A | Anonymous: "Camera resectioning - Wikipedia", , 23 November 2024 (2024-11-23), XP093326053, Retrieved from the Internet: URL:https://en.wikipedia.org/w/index.php?title=Camera_resectioning&oldid=1259204067 [retrieved on 2025-10-16] * the whole document * ----- | 1-15 | |
| A | Anonymous: "Artificial intelligence visual art - Wikipedia", , 2 December 2024 (2024-12-02), XP093326094, Retrieved from the Internet: URL:https://en.wikipedia.org/w/index.php?title=Artificial_intelligence_visual_art&oldid=1260733251 [retrieved on 2025-10-16] * the whole document * ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 20 October 2025 | Krauß, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1575

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | | Publication date | Patent family member(s) | | Publication date |
|---|---|---|---|---|---|
| CN 117634549 | A | 01-03-2024 | CN | 117634549 A | 01-03-2024 |
| | | | DE | 102023122032 A1 | 29-02-2024 |
| | | | US | 2024070450 A1 | 29-02-2024 |
| CN 118475901 | A | 09-08-2024 | CN | 118475901 A | 09-08-2024 |
| | | | EP | 4445248 A1 | 16-10-2024 |
| | | | US | 2023215075 A1 | 06-07-2023 |
| | | | WO | 2023128695 A1 | 06-07-2023 |

EPO FORM P0459

For more details about this annex : see Official Journal of the European Patent Office, No. 12/82